(19) Europäisches Patentamt / European Patent Office / Office européen des brevets

(11) **EP 2 130 851 A1**

(12) **EUROPEAN PATENT APPLICATION**
published in accordance with Art. 153(4) EPC

(43) Date of publication:
**09.12.2009 Bulletin 2009/50**

(51) Int Cl.:
*C08G 69/26* [(2006.01)]   *B60K 15/03* [(2006.01)]
*B65D 65/40* [(2006.01)]   *C08J 5/00* [(2006.01)]

(21) Application number: **08739631.3**

(22) Date of filing: **26.03.2008**

(86) International application number:
**PCT/JP2008/056518**

(87) International publication number:
**WO 2008/123534 (16.10.2008 Gazette 2008/42)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **27.03.2007 JP 2007081233**

(71) Applicant: **Ube Industries, Ltd.**
**Ube-shi**
**Yamaguchi 755-8633 (JP)**

(72) Inventors:
• **OKUSHITA, Hiroshi**
**Ube-shi**
**Yamaguchi 755-8633 (JP)**
• **KURACHI, Kouichiro**
**Ube-shi**
**Yamaguchi 755-8633 (JP)**
• **KANEKO, Yukio**
**Ube-shi**
**Yamaguchi 755-8633 (JP)**
• **SHIMOKAWA, Masato**
**Ube-shi**
**Yamaguchi 755-8633 (JP)**

(74) Representative: **Hoeger, Stellrecht & Partner**
**Patentanwälte**
**Uhlandstrasse 14c**
**70182 Stuttgart (DE)**

(54) **MOLDING MATERIAL FOR FUEL COMPONENT AND FUEL COMPONENT USING THE SAME**

(57)   A molding material for fuel parts (particularly a molding material for fuel parts of automobiles), ensuring excellent fuel barrier property against not only gasoline fuel, but also an alcohol mixed fuel, is provided. A molding material for fuel parts and a fuel part, comprising a polyamide containing an oxamide bond unit represented by -NH-R-NHC(=O)C(=O)-.

EP 2 130 851 A1

**Description**

CROSS-REFERENCE TO RELATED APPLICATIONS

This application is based upon and claims the benefit of priority from Japanese Patent Application No. 2007-081233, filed on March 27, 2007, the disclosures of which are incorporated herein by reference.

TECHNICAL FIELD

The present invention relates to a molding material for fuel parts, particularly a molding material for fuel parts of automobiles, and a fuel part using the same. More specifically, the present invention relates to a molding material for fuel parts and a fuel part, ensuring excellent fuel barrier property and low water absorption.

BACKGROUND ART

A polyamide resin has excellent mechanical performance, and therefore is widely used as an injection molding material for automobile or electrical/electronic parts and further as a packaging material for food, beverages, pharmaceuticals and electronic parts. A high barrier property against fuel is required of the parts used in the periphery of fuel (gasoline), such as fuel tank, fuel tube, quick connector, canister and valve, but the fact is that the fuel barrier property of a general-purpose polyamide such as nylon 6 and nylon 66 is insufficient. Furthermore, addition of biomass-derived ethanol or the like to gasoline enables reduction in the amount of the fossil fuel used, as well as in the emission of carbon dioxide, and therefore studies are being made on use of an ethanol-containing fuel. In this regard, nylon 6, nylon 66 and the like are poor in their barrier property against alcohols, and a material more enhanced in barrier performance is in demand. Also, nylon 6 and nylon 66 have a high water absorption rate and are insufficient in dimensional stability, and thus their use is permitted only in limited parts.
For such customer needs, various semi-aromatic polyamides mainly composed of terephthalic acid and hexamethylenediamine (HMDA) have been proposed, and some have been put into practical use. In Japanese Unexamined Patent Publication (Kokai) Nos. 3-7761 and 4-239531, a semi-aromatic polyamide using, as the main component, a polyamide composed of terephthalic acid and hexamethylenediamine (hereinafter simply referred to as "PA6T") is disclosed as being usable for automobile parts. However, PA6T has a melting point in the vicinity of 370°C, exceeding the decomposition temperature of the polymer and can be hardly used in practice because of its difficulty of melt polymerization and melt molding. Accordingly, at present, this polyamide is actually used as a composition whose melting point is lowered to a practically usable temperature region, i.e. from approximately 280 to 320°C, by copolymerizing from 30 to 40 mol% of a dicarboxylic acid component such as adipic acid and isophthalic acid or an aliphatic polyamide such as nylon 6. In these related art publications, compared with the conventional aliphatic polyamide, water absorption is somewhat improved by virtue of introduction of an aromatic group, but still fails to reach a level of substantial solution of the problem. Furthermore, there is no suggestion that the composition exhibits excellent fuel barrier property.
Japanese Unexamined Patent Publication (Kohyo) No. 5-506466 (WO91/13113) discloses a polyamide having a polyamide bond unit where the dicarboxylic acid unit is oxalic acid and the diamine unit is an aliphatic diamine having a carbon number of 6 to 12 and/or an aromatic diamine having a carbon number of 6 to 14. With respect to oxygen permeability, this related publication indicates that the oxygen permeability is lower in a high humidity region than in a low humidity region, which is useful in oxygen barrier usage, but there is neither description of the application to fuel parts nor suggestion that excellent performance is exerted particularly in terms of fuel barrier property. Also, the polymer is disadvantageously obtained only in a low molecular form, with the result that a tough molded body cannot be formed.

DISCLOSURE OF THE INVENTION

An object of the present invention is to provide a molding material for fuel parts (particularly a molding material for fuel parts of automobiles) and a fuel part, ensuring excellent fuel barrier property against not only gasoline fuel, but also an alcohol mixed fuel and low water absorption, and which cannot be achieved by conventional techniques.
As a result of intensive studies to solve these problems, the present inventors have found that the above-described object can be attained by a molding material for fuel parts and a fuel part, comprising a polyamide containing an oxamide bond unit, preferably an oxamide bond unit represented by -NH-R-NHC(=O)C(=O)-[wherein R is an alkylene having from 6 to 12 carbon atoms and/or R is an arylene having from 6 to 14 carbon atoms].

BEST MODE FOR CARRYING OUT THE INVENTION

(1) Constituent Components of Polyamide Resin

The polyamide for use in the present invention is a polyamide resin where the dicarboxylic acid component is oxalic acid and the diamine component is an alkylene having from 6 to 12 carbon atoms and/or an arylene having from 6 to 14 carbon atoms.

As for the oxalic acid source used in the production of the polyamide for use in the present invention, an oxalic acid diester is used, which is not particularly limited as long as it has reactivity with an amino group, and examples thereof include an oxalic acid diester of an aliphatic monohydric alcohol, such as dimethyl oxalate, diethyl oxalate, di-n-(or i-)propyl oxalate and di-n-(or i- or tert-)butyl oxalate, an oxalic acid diester of an alicyclic alcohol, such as dicyclohexyl oxalate, and an oxalic acid diester of an aromatic alcohol, such as diphenyl oxalate.

Among these oxalic acid diesters, an oxalic acid diester of an aliphatic monohydric alcohol having more than 3 carbon atoms, an oxalic acid diester of an alicyclic alcohol, and an oxalic acid diester of an aromatic alcohol are preferred, and dibutyl oxalate and diphenyl oxalate are particularly preferred.

Examples of the alkylenediamine component having from 6 to 12 carbon atoms include a linear aliphatic alkylenediamine such as 1,6-hexamethylenediamine, 1,7-heptanediamine, 1,8-octanediamine, 1,9-nonanediamine, 1,10-decanediamine, 1,11-undecanediamine and 1,12-dodecanediamine; and a branched chain aliphatic alkylene diamine such as 1-butyl-1,2-ethanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2,3-dimethyl-1,4-butanediamine, 2-methyl-1,5-pentanediamine, 3-methyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2,4-diethyl-1,6-hexanediamine, 2,2-dimethyl-1,7-heptanediamine, 2,3-dimethyl-1,7-heptanediamine, 2,4-dimethyl-1,7-heptanediamine, 2,5-dimethyl-1,7-heptanediamine, 2,-methyl-1,8-octanediamine, 3-methyl-1,8-octanediamine, 4-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-methyl-1,8-octanediamine, 4,4-dimethyl-1,8-octanediamine and 5-methyl-1,9-nonanediamine. One of these may be used alone, or two or more thereof may be used together.

Among these aliphatic alkylenediamines, from the standpoint of obtaining a polyamide molded article more excellent in the fuel barrier property and low water absorption, 1,6-hexamethylenediamine, 1,8-octanediamine, 2-methyl-1,8-octanediamine, 1,9-nonanediamine, 1,10-decanediamine, 1,11-undecanediamine and 1,12-dodecanediamine are preferred, and hexamethylenediamine, 1,9-nonanediamine and 2-methyl-1,8-octanediamine are more preferred.

Also, it is preferred to use three kinds of diamines, i.e. 1,-6-hexamethylenediamine, 1,9-nonanediamine and 2-methyl-1,8-octanediamine, in combination.

Examples of the arylenediamine component having from 6 to 14 carbon atoms include an aromatic diamine such as p-phenylenediamine, m-phenylenediamine, p-xylylenediamine, m-xylylenediamine, 4,4'-diaminodiphenylmethane, 4,4'-diaminodiphenylsulfone and 4,4'-diaminodiphenyl ether. One of these may be used alone, or two or more thereof may be used together.

Among these aromatic diamines, from the standpoint of obtaining a polyamide molded article more excellent in the fuel barrier property and low water absorption, p-xylylenediamine and m-xylylenediamine are preferred, and m-xylylenediamine is more preferred.

Polyamide 92 is obtained by using an oxalic acid or/and an oxalic acid diester as the dicarboxylic acid component and using 1,9-nonanediamine or/and 2-methyl-1,8-octanediamine as the diamine component.

Also, polyamide 92/62 is obtained by using an oxalic acid or/and an oxalic acid diester as the dicarboxylic acid component and using 1,9-nonanediamine or/and 2-methyl-1,8-octanediamine and 1,6-hexamethylenediamine as the diamine component.

(2) Production of Polyamide Resin

The polyamide resin for use in the present invention can be produced using an arbitrary method known as a method for producing a polyamide. For example, the polyamide resin can be produced by polycondensation utilizing a solution polycondensation method, an interfacial polycondensation method, a melt polycondensation method or a solid phase polycondensation method. According to studies by the present inventors, the polyamide resin can be obtained by batchwise or continuously polycondensation-reacting a diamine and an oxalic acid diester. More specifically, as illustrated in the following operation, (i) a pre-polycondensation step and (ii) a post-polycondensation step are preferably performed in this order.

(i) Pre-Polycondensation Step:

The inside of a reaction vessel is replaced with nitrogen, and then a diamine (diamine component) and an oxalic acid diester (oxalic acid source) are mixed. At the mixing, a solvent in which both the diamine and the oxalic acid diester are soluble may be used. The solvent in which both the diamine component and the oxalic acid source are soluble is not particularly limited but, for example, toluene, xylene, trichlorobenzene, phenol or trifluoroethanol may be used. In particular, toluene may be preferably used. For example, a toluene solution having dissolved therein a diamine is heated at 50°C, and an oxalic diester is added thereto. At this time, the charging ratio of the oxalic acid diester and the diamine is, in terms of oxalic acid/diester diamine, from 0.8 to 1.5 (by mol), preferably from 0.91 to 1.1 (by mol), more preferably from 0.99 to 1.01 (by mol).

While stirring and/or nitrogen bubbling in the reaction vessel after charging, the temperature is raised under atmospheric pressure. The reaction temperature is preferably controlled such that the end-point temperature becomes from 80 to 150°C, more preferably from 100 to 140°C. The reaction time at the end-point temperature is from 3 to 6 hours.

(ii) Post-Polycondensation Step:

In order to further increase the molecular weight, the polymerization product produced in the pre-polycondensation step is gradually heated in the reaction vessel under atmospheric pressure. In the temperature rise process, the temperature is raised finally to the range of 220 to 300°C from the end-point temperature of the pre-polycondensation step, i.e. a temperature of 80 to 150°C. The reaction is preferably performed by holding the temperature above for 1 to 8 hours, preferably from 2 to 6 hours, including the temperature rise time. Furthermore, in the post-polymerization step, polymerization under reduced pressure may also be performed, if desired. In the case of performing polymerization under reduced pressure, the ultimate pressure is preferably from less than 0.1 MPa to 13.3 Pa.

At the production of the polyamide, for example, phosphoric acid, phosphorous acid, hypophosphorous acid, or a salt or ester thereof may be used as the catalyst. Specific examples thereof include a metal salt such as potassium, sodium, magnesium, vanadium, calcium, zinc, cobalt, manganese, tin, tungsten, germanium, titanium and antimony salts, an ammonium salt, an ethyl ester, an isopropyl ester, a butyl ester, a hexyl ester, an isodecyl ester, an octadecyl ester, a decyl ester, a stearyl ester and a phenyl ester.

(3) Characteristics and Physical Properties of Polyamide Resin

The polyamide resin obtained by the present invention is not particularly limited in its molecular weight, but the relative viscosity $\eta r$ measured at 25°C by using a 96% concentrated sulfuric acid solution having a polyamide resin concentration of 1.0 g/dl is from 1.8 to 6.0, preferably from 2.0 to 5.5, more preferably from 2.5 to 4.5. If $\eta r$ is less than 1.8, the molded product becomes brittle and its physical properties deteriorate, whereas if $\eta r$ exceeds 6.0, a high melt viscosity results to degrade the molding processability.

(4) Components Blendable in Polyamide Resin

In the polyamide resin obtained by the present invention, other dicarboxylic acid components can be mixed within a range not impairing the effects of the present invention. Examples of the other dicarboxylic acid components other than oxalic acid include an aliphatic dicarboxylic acid such as malonic acid, dimethylmalonic acid, succinic acid, glutaric acid, adipic acid, 2-methyladipic acid, trimethyladipic acid, pimelic acid, 2,2-dimethylglutaric acid, 3,3-diethylsuccinic acid, azelaic acid, sebacic acid and suberic acid; an alicyclic dicarboxylic acid such as 1,3-cyclopentanedicarboxylic acid and 1,4-cyclohexanedicarboxylic acid; and an aromatic dicarboxylic acid such as terephthalic acid, isophthalic acid, 2,6-naphthalenedicarboxylic acid, 2,7-naphthalenedicarboxylic acid, 1,4-naphthalenedicarboxylic acid, 1,4-phenylenedioxydiacetic acid, 1,3-phenylenedioxydiacetic acid, dibenzoic acid, 4,4'-oxydibenzoic acid, diphenylmethane-4,4'-dicarboxylic acid, diphenylsulfone-4,4'-dicarboxylic acid and 4,4'-biphenyldicarboxylic acid. At the polycondensation reaction, one of these dicarboxylic acids may be added alone, or an arbitrary mixture thereof may be added. In addition, a polyvalent carboxylic acid such as trimellitic acid, trimesic acid and pyromellitic acid may be used within the range allowing for melt molding.

In the present invention, other polyoxamides or polyamides such as aromatic polyamide, aliphatic polyamide and alicyclic polyamide may be mixed within a range not impairing the effects of the present invention. Also, various additives such as thermoplastic polymer except for polyamide, elastomer, filler and reinforcing fiber may be similarly blended.

Furthermore, in the polyamide resin obtained by the present invention, a stabilizer (e.g., copper compound), a coloring agent, an ultraviolet absorber, a light stabilizing agent, an antioxidant, an antistatic agent, a flame retardant, a crystallization accelerator, a glass fiber, a plasticizer, a lubricant and the like may also be added, if desired, during or after the polycondensation reaction.

(5) Application of Polyamide Resin

The polyamide resin obtained by the present invention can be used as a raw material for fuel tanks, single-layer fuel tubes, multi-layer fuel tubes, quick connectors, canisters, valves and the like.

The present invention can provide a molding material for fuel parts (particularly, a molding material for fuel parts of automobiles) and a fuel part, ensuring excellent fuel barrier property against not only gasoline fuel, but also an alcohol mixed fuel and low water absorption, which cannot be achieved by conventional techniques.

The molding material for fuel parts of the present invention can be used as a molding material for fuel parts, particularly of automobiles. More specifically, the molding material can be suitably used for a fuel tank, a fuel tube and parts attached thereto, for example, various connectors such as quick connector, a filler cap, valves such as control valve, a fuel strainer, a canister and a separator.

EXAMPLES

[Measurement of Physical Properties, Molding, Evaluation Method]

The present invention will be described in greater detail below by referring to Examples, although it is not limited thereto. Incidentally, in Examples, the relative viscosity, the number-average molecular weight, the end group concentration, the melting point, the crystallization temperature, the fuel permeation coefficient, and the saturated water absorption rate were measured by the following methods.

(1) Relative Viscosity ($\eta$r)

$\eta$r was measured using a 96% sulfuric acid solution (concentration: 1.0 g/dl) at 25°C by means of an Ostwald-type viscometer.

(2) Number-Average Molecular Weight (Mn)

The number-average molecular weight (Mn) was calculated based on the signal intensity determined from the $^1$H-NMR spectrum, for example, in the case of a polyamide produced using dibutyl oxalate as the oxalic acid source and using 1,9-nonanediamine (NMDA)/2-methyl-1,8-octanediamine (MODA) = 85/15 mol% as the diamine component [hereinafter simply referred to as "PA92(NMDA/MODA=85/15)"], calculated according to the following formula:

$$\text{Mn} = \text{np} \times 212.30 + \text{n(NH}_2) \times 157.28 + \text{n(OBu)} \times 129.14 + \text{n(NHCHO)} \times 29.14$$

The measurement conditions of $^1$H-NMR were as follows.

· Model used: AVANCE500, manufactured by Bruker BioSpin K.K.
· Solvent: deuterated sulfuric acid
· SCANS: 1,024

In the formula above, each term is defined as follows.

· p = Np/[N(NH$_2$)+N(NHCHO)+N(OBu))/2]
· n(NH$_2$) = N(NH$_2$)/[(N(NH$_2$)+N(NHCHO)+N(OBu))/2]
· n(NHCHO) = N(NHCHO)/[(N(NH$_2$)+N(NHCHO)+N(OBu))/2]
· n(OBu) = (OBu)/[(N(NH$_2$)+N(NHCHO)+N(OBu))/2]
· Np = Sp/sp-N(NHCHO)
· N(NH$_2$) = S(NH$_2$)/s(NH$_2$)
· N(NHCHO) = S(NHCHO)/s(NHCHO)
· N(OBu) = S(OBu)/s(OBu)

Here, each term means the following.

· Np: The total number of repeating units in the molecular chain, excluding the terminal units of PA92(NMDA/MODA=85/15).

· np: The number of repeating units in the molecular chain per one molecule.

· Sp: The integration value of signals (in the vicinity of 3.1 ppm) based on protons of the methylene group adjacent to an oxamide group in the repeating unit in the molecular chain, excluding the terminals of PA92(NMDA/MODA=85/15).

· sp: The number of hydrogens counted in the integration value Sp (four hydrogens).

· $N(NH_2)$: The total number of amino end groups of PA92(NMDA/MODA=85/15).

· $n(NH_2)$: The number of amino end groups per one molecule.

· $S(NH_2)$: The integration value of signals (in the vicinity of 2.6 ppm) based on protons of the methylene group adjacent to a terminal amino group of PA92(NMDA/MODA=85/15).

· $s(NH_2)$: The number of hydrogens counted in the integration value $S(NH_2)$ (two hydrogens) .

· N(NHCHO): The total number of formamide end groups of PA92(NMDA/MODA=85/15).

· n(NHCHO): The number of formamide end groups per one molecule.

· S(NHCHO): The integration value of signals (7.8 ppm) based on protons of the formamide group of PA92(NMDA/MODA=85/15).

· s(NHCHO): The number of hydrogens counted in the integration value S(NHCHO) (one hydrogen).

· N(OBu): The total number of butoxy end groups of PA92(NMDA/MODA=85/15).

· n(OBu): The number of butoxy end groups per one molecule.

· S(OBu): The integration value of signals (in the vicinity of 4.1 ppm) based on protons of the methylene group adjacent to an oxygen atom of the butoxy end group of PA92(NMDA/MODA=85/15)

· s(OBu): The number of hydrogens counted in the integration value S(OBu) (two hydrogens).

(3) End Group Concentration

In the case of using dibutyl oxalate, the amino end group concentration $[NH_2]$, the butoxy end group concentration [OBu] and the formamide end group concentration [NHCHO] were determined according to the following formulae, respectively.

· Amino end group concentration $[NH_2] = n(NH_2)/Mn$
· Butoxy end group concentration [OBu] = n(OBu)/Mn
· Formamide end group concentration [NHCHO] = n(NHCHO)/Mn

(4) Melting Point (Tm) and Crystallization Temperature (Tc)

Tm and Tc were measured using PYRIS Diamond DSC manufactured by Perkin Elmer in a nitrogen atmosphere. The temperature was raised to 320°C from 30°C at a rate of 10°C/min (referred to as a "temperature rise first run"), held at 320°C for 3 minutes, then lowered to -100°C at a rate of 10°C/min (referred to as a "temperature drop first run"), and again raised to 320°C at a rate of 10°C/min (referred to as a "temperature rise second run"). From the obtained DSC chart, the exothermic peak temperature of the temperature drop first run was determined as Tc, and the endothermic peak temperature of the temperature rise second run was determined as Tm.

(5) Film Molding

Film molding was performed using a vacuum press, TMB-10, manufactured by Toho Machinery Co., Ltd. The resin was melted under heating at 230 to 300°C for 6 minutes in a reduced pressure atmosphere of 500 to 700 Pa, then pressed under 10 MPa for 1 minute, thereby performing film molding, and after returning the reduced pressure atmosphere to atmospheric pressure, cooled and crystallized at room temperature under 10 MPa for 2 minutes to obtain a film.

(6) Fuel Permeation Coefficient

After 50 ml of fuel {EO (toluene/isooctane =50/50 vol%), E10 (toluene/isooctane/ethanol = 45/45/10 vol%), E100 (ethanol = 100 vol%)} was put in a stainless steel vessel, the vessel was covered with the film molded under the conditions of (5) by engaging a PTFE-made gasket around the film, and the cover was secured by screw pressure. The cup was placed in a constant-temperature bath at 60°C, and nitrogen flowed in the bath at 50 ml/min. The change with aging of the weight was measured and when the change of the weight per hour was stabilized, the fuel permeation coefficient was calculated according to formula (1). The permeation area of the specimen sample was 78.5 $cm^2$.

$$\text{Fuel permeation coefficient } (g \cdot mm/m^2 \cdot day) =$$
$$[\text{permeation weight (g)} \times \text{film thickness}$$
$$(mm)]/[\text{permeation area } (m^2) \times \text{number of days}$$
$$(day)] \hspace{4cm} (1)$$

(7) Saturated Water Absorption

The film (dimensions: 20 mm x 10 mm, thickness: 0.25 mm, weight: about 0.05 g) obtained by molding a polyamide resin under the conditions of (5) was immersed in ion-exchanged water at 23°C and by taking the film out at predetermined time intervals, and the weight of the film was measured. When the rate of increase in the film weight was 0.2% three times in a row, water absorption into the polyamide resin film was judged as being saturated, and the saturated water absorption (%) was calculated from the film weight (X g) before immersion in water and the film weight (Y g) when reached saturation, according to formula (2).

$$\text{Saturated water absorption (\%)} = \frac{Y-X}{X} \times 100 \hspace{1cm} (2)$$

(8) 1% Weight Decrease Temperature (Td)

Td was measured by thermogravimetric analysis (TGA) using THERMOGRAVIMETRIC ANALYZER TGA-50 manufactured by Shimadzu Corporation. The temperature was raised to 500°C from room temperature at a temperature rise rate of 10°C/min under nitrogen flow at 20 ml/min, and Td was measured.

[Example 1]

(i) Pre-Polycondensation Step:

The inside of a separable flask having an inner volume of 1 L and being equipped with a stirrer, a reflux condenser, a nitrogen inlet tube and a raw material charging port was replaced with a nitrogen gas having a purity of 99.9999%, and 500 ml of dehydrated toluene, 68.3091 g (0.4316 mol) of 1,9-nonanediamine (NMDA) and 12.0545 g (0.0762 mol) of 2-methyl-1,8-octanediamine (MODA) were charged into the flask. This separable flask was placed in an oil bath and after raising the temperature to 50°C, 102.1956 g (0.5053 mol) of dibutyl oxalate was charged thereinto. Subsequently, the temperature of the oil bath was raised to 130°C, and the reaction was allowed to proceed for 5 hours under reflux. Incidentally, all operations from the charging of raw materials to the completion of reaction were performed under a nitrogen flow of 50 ml/min. The contents were cooled and then filtered, and the solvent was distilled off by vacuum drying to obtain a pre-polymerization product.

(ii) Post-Polycondensation Step:

The pre-polymerization product obtained by the above operations was charged into a glass-made reaction tube having a diameter of about 35 mmφ and being equipped with a stirrer, an air cooling tube and a nitrogen inlet tube, and an operation of keeping the inside of the reaction tube under reduced pressure of 13.3 Pa or less and then introducing a nitrogen gas to atmospheric pressure was repeated 5 times. Thereafter, the reaction tube was transferred to a salt bath kept at 210°C under a nitrogen flow of 50 ml/min and immediately, the temperature rise was started. The temperature of the salt bath was raised to 260°C over 1 hour, and the reaction was allowed to proceed for a further 2 hours. The reaction product was removed from the salt bath and cooled to room temperature under a nitrogen flow of 50 ml/min to obtain PA92(NMDA/MODA=85/15). Analysis results of the obtained polyamide are shown in Table 1. The results of fuel permeation coefficient and saturated water absorption of the film molded at 260°C are shown in Table 2.

[Example 2]

PA92(NMDA/MODA=50/50) was obtained by performing the reaction in the same manner as in Example 1, except that in the pre-polymerization step, a 500 ml-volume separable flask was used and 200 ml of dehydrated toluene, 15.6168 g (0.0987 mol) of 1,9-nonanediamine (NMDA), 15.6168 g (0.0987 mol) of 2-methyl-1,8-octanediamine (MODA) and 40.0412 g (0.1980 mol) of dibutyl oxalate were charged and in the post-polymerization step, the reaction was allowed to proceed at 230°C. Analysis results of the obtained polyamide are shown in Table 1. The results of fuel permeation coefficient and saturated water absorption of the film molded at 230°C are shown in Table 2.

[Example 3]

PA92(NMDA/MODA=30/70) was obtained by performing the reaction in the same manner as in Example 1, except that in the pre-polymerization step, a 500 ml-volume separable flask was used and 200 ml of dehydrated toluene, 9.5655 g (0.0604 mol) of 1,9-nonanediamine (NMDA), 22.3195 g (0.1410 mol) of 2-methyl-1,8-octanediamine (MODA) and 40.7881 g (0.2017 mol) of dibutyl oxalate were charged and in the post-polymerization step, the reaction was allowed to proceed at 240°C. Analysis results of the obtained polyamide are shown in Table 1. The results of fuel permeation coefficient and saturated water absorption of the film molded at 240°C are shown in Table 2.

[Example 4]

PA92(NMDA/MODA=6/94) was obtained by performing the reaction in the same manner as in Example 1, except that in the pre-polymerization step, a 500 ml-volume separable flask was used and 200 ml of dehydrated toluene, 1.8933 g (0.0120 mol) of 1,9-nonanediamine (NMDA), 29.6611 g (0.1873 mol) of 2-methyl-1,8-octanediamine (MODA) and 40.3094 g (0.1993 mol) of dibutyl oxalate were charged. Analysis results of the obtained polyamide are shown in Table 1. The results of fuel permeation coefficient and saturated water absorption of the film molded at 260°C are shown in Table 2.

[Example 5]

PA62/92(HMDA/NMDA/MODA=50/25/25) was obtained by performing the reaction in the same manner as in Example 1, except that in the pre-polymerization step, a 500 ml-volume separable flask was used and 200 ml of dehydrated toluene, 11.5866 g (0.0997 mol) of hexamethylenediamine (HMDA), 7.8667 g (0.0497 mol) of 1,9-nonanediamine (NMDA), 7.8667 g (0.0497 mol) of 2-methyl-1,8-octanediamine (MODA) and 40.3524 g (0.1995 mol) of dibutyl oxalate were charged and in the post-polymerization step, the reaction was allowed to proceed at 270°C. Analysis results of the obtained polyamide are shown in Table 1. The results of fuel permeation coefficient and saturated water absorption of the film molded at 285°C are shown in Table 2.

[Example 6]

PA62/92(HMDA/NMDA/MODA=60/20/20) was obtained by performing the reaction in the same manner as in Example 1, except that in the pre-polymerization step, a 500 ml-volume separable flask was used and 200 ml of dehydrated toluene, 14.1221 g (0.1215 mol) of hexamethylenediamine (HMDA), 6.4309 g (0.0406 mol) of 1,9-nonanediamine (NMDA), 6.4309 g (0.0406 mol) of 2-methyl-1,8-octanediamine (MODA) and 40.0074 g (0.2028 mol) of dibutyl oxalate were charged and in the post-polymerization step, the reaction was allowed to proceed at 290°C. Analysis results of the obtained polyamide are shown in Table 1. The results of fuel permeation coefficient and saturated water absorption of the film molded at 300°C are shown in Table 2.

[Example 7]

PA62/92(HMDA/NMDA/MODA=60/2.4/37.6) was obtained by performing the reaction in the same manner as in Example 1, except that in the pre-polymerization step, a 500 ml-volume separable flask was used and 200 ml of dehydrated toluene, 14.6440 g (0.1260 mol) of hexamethylenediamine (HMDA), 0.7991 g (0.0050 mol) of 1,9-nonanediamine (NMDA), 12.5185 g (0.0791 mol) of 2-methyl-1,8-octanediamine (MODA) and 42.5136 g (0.2102 mol) of dibutyl oxalate were charged and in the post-polymerization step, the reaction was allowed to proceed at 290°C. Analysis results of the obtained polyamide are shown in Table 1. The results of fuel permeation coefficient and saturated water absorption of the film molded at 300°C are shown in Table 2.

[Example 8]

(i) Pre-Polycondensation Step:

The inside of a separable flask having an inner volume of 1 L and being equipped with a stirrer, a reflux condenser, a nitrogen inlet tube and a raw material charging port was replaced with nitrogen gas having a purity of 99.9999% and after charging 500 ml of dehydrated toluene and further adding and dissolving 0.0246 g of benzenephosphine as a catalyst, 29.1654 g (0.2510 mol) of hexamethylenediamine (HMDA) and 34.2355 g (0.2514 mol) of m-xylylenediamine (MXDA) were charged into the flask. This separable flask was placed in an oil bath and after raising the temperature to 50°C, 101.6145 g (0.5024 mol) of dibutyl oxalate was charged thereinto. Subsequently, the temperature of the oil bath was raised to 130°C, and the reaction was allowed to proceed for 5 hours under reflux. Incidentally, all operations from the charging of raw materials to the completion of reaction were performed under a nitrogen flow of 50 ml/min. The contents were cooled and then filtered, and the solvent was distilled off by vacuum drying to obtain a pre-polymerization product.

(ii) Post-Polycondensation Step:

The pre-polymerization product obtained by the operations above was charged into a separable flask having an inner volume of 300 mL and being equipped with a stirrer, an air cooling tube and a nitrogen inlet tube, and an operation of keeping the inside of the reaction tube under reduced pressure of 13.3 Pa or less and then introducing a nitrogen gas to atmospheric pressure was repeated 5 times. Thereafter, the reaction tube was transferred to a salt bath kept at 190°C under a nitrogen flow of 50 ml/min, and immediately the temperature rise was started. The temperature of the salt bath was raised to 250°C over 1 hour and after reducing the pressure inside of the vessel to 77 Pa, the reaction was allowed to proceed further in a solid phase state for 2.5 hours. The reaction product was removed from the salt bath and cooled to room temperature under a nitrogen flow of 50 ml/min to obtain PAM2/62(MXDA/HMDA=50/50). Analysis results of the obtained polyamide are shown in Table 1. The results of fuel permeation coefficient and saturated water absorption of the film molded at 295°C are shown in Table 2.

[Comparative Example 1]

A film was molded at 250°C by using PA6 (UBE Nylon 1013B, produced by Ube Industries, Ltd.) in place of the polyamide resin obtained in the present invention. The fuel permeation coefficient and saturated water absorption of this film were evaluated. The results are shown in Table 2.

[Comparative Example 2]

A film was molded at 295°C by using PA66 (UBE Nylon 2020B, produced by Ube Industries, Ltd.) in place of the polyamide resin obtained in the present invention. The fuel permeation coefficient and saturated water absorption of this film were evaluated. The results are shown in Table 2.

[Comparative Example 3]

A film was molded at 220°C by using PA12 (UBESTA 3014U, produced by Ube Industries, Ltd.) in place of the polyamide resin obtained in the present invention. The fuel permeation coefficient and saturated water absorption of this film were evaluated. The results are shown in Table 2.

[Comparative Example 4]

PA62(HMDA=100) was obtained by performing the reaction in the same manner as in Example 1, except that in the pre-polymerization step, a 500 ml-volume separable flask was used and 200 ml of dehydrated toluene, 24.4299 g (0.2102 mol) of hexamethylenediamine (HMDA) and 42.5136 g (0.2102 mol) of dibutyl oxalate were charged and in the post-polymerization step, a solid-phase reaction was allowed to proceed at 250°C for 10 hours. Analysis results of the obtained polyamide are shown in Table 1.

Table 1

| | Resin | Diamine Component (mol%) | | | | ηr | Mn | Terminal Group Concentration (10⁻⁶ eq/g) | | | Tm (°C) | Tc (°C) | Td (°C) | Td-Tm |
|---|---|---|---|---|---|---|---|---|---|---|---|---|---|---|
| | | NMDA | MODA | HMDA | MXDA | | | [OBu] | {NH2] | [NHCHO] | | | | |
| Example 1 | PA92 | 85 | 15 | | | 3.30 | 21700 | 0 | 6.0 | 3.2 | 235 | 212 | | |
| Example 2 | PA92 | 50 | 50 | | | 3.43 | 36000 | 3.1 | 1.0 | 1.7 | 206 | 184 | 301 | 95 |
| Example 3 | PA92 | 30 | 70 | | | 3.51 | 42100 | 1.9 | 1.4 | 1.4 | 219 | 192 | 219 | 64 |
| Example 4 | PA92 | 6 | 94 | | | 3.27 | 35600 | 0 | 2.8 | 2.9 | 230 | 205 | 283 | 53 |
| Example 5 | PA62/92 | 25 | 25 | 50 | | 3.61 | 22200 | 0 | 4.9 | 4.1 | 261 | 231 | 273 | 12 |
| Example 6 | PA62/92 | 20 | 20 | 60 | | 2.88 | 14800 | 0.6 | 6.9 | 6.0 | 276 | 255 | | |
| Example 7 | PA62/92 | 2.4 | 37.6 | 60 | | 2.96 | 18100 | 0.4 | 6.1 | 4.6 | 276 | 255 | | |
| Example 8 | PA62/92 | | | 50 | 50 | 2.77 | 27400 | 1.9 | 0 | 5.4 | 273 | 236 | | |
| Comparative Example 4 | PA62 | | | 100 | | 1.55 | | | | | 329 | | 313 | -16 |

Table 2

| | Resin | Diamine Component (mol%) | | | | Fuel Permeation Coefficient (g·mm/m²·day) | | | Saturated Water Absorption (%) |
|---|---|---|---|---|---|---|---|---|---|
| | | NMDA | MODA | HMDA | MXDA | E0 | E10 | E100 | |
| Example 1 | PA92 | 85 | 15 | | | 0.03 | 2.2 | 1.1 | 1.3 |
| Example 2 | PA92 | 50 | 50 | | | | 3.1 | | 0.7 |
| Example 3 | PA92 | 30 | 70 | | | | 2.3 | | 0.9 |
| Example 4 | PA92 | 6 | 94 | | | | 1.9 | | 0.9 |
| Example 5 | PA62/92 | 25 | 25 | 50 | | | 2.1 | | 1.1 |
| Example 6 | PA62/92 | 20 | 20 | 60 | | | 1.2 | | 1.4 |
| Example 7 | PA62/92 | 2.4 | 37.6 | 60 | | | 1.1 | | 1.4 |
| Example 8 | PAM2/62 | | | 50 | 50 | 3.7 | 3.0 | 0.4 | 2.0 |
| Comparative Example 1 | PA6 | | | | | | 14.3 | 114.2 | 10.6 |
| Comparative Example 2 | PA66 | | | | | | 4.0 | 39.3 | 9.3 |
| Comparative Example 3 | PA12 | | | | | | 164.3 | | 1.6 |

The molding material for fuel parts, which uses any one polyamide resin out of a polyamide resin using 1,9-nonanediamine (NMDA) and 2-methyl-1,8-ocanediamine (MODA) in combination as the diamine component, a polyamide resin using 1,9-nonanediamine (NMDA), 2-methyl-1,8-octanediamine (MODA) and hexamethylenediamine (HMDA) in combination as the diamine component, and a polyamide resin using hexamethylenediamine (HMDA) and m-xylylenediamine (MXDA) in combination as the diamine component, is a molding material for fuel parts, ensuring a wide moldable temperature width and more excellent processability.

INDUSTRIAL APPLICABILITY

The molding material for fuel parts of the present invention ensures excellent fuel barrier property against not only gasoline fuel, but also an alcohol mixed fuel and low water absorption and therefore can be used as a molding material for fuel parts (particularly a molding material for fuel parts of automobiles). More specifically, the molding material is suitably for use as a fuel tank, a fuel tube or parts attached thereto, for example, various connectors such as a quick connector, a filler cap, valves such as control valves, a fuel strainer, a canister and a separator.

**Claims**

1.    A molding material for fuel parts, comprising a polyamide containing an oxamide bond unit.

2.    The molding material for fuel parts as claimed in claim 1, wherein the oxamide bond unit is represented by -NH-R-NHC(=O)C(=O)- [wherein R is an alkylene having from 6 to 12 carbon atoms and/or R is an arylene having from 6 to 14 carbon atoms].

3.    The molding material for fuel parts as claimed in claim 2, wherein in the polyamide, the alkylene having from 6 to 12 carbon atoms of R is one or more members selected from hexamethylene, nonamethylene and 2-methyloctamethylene.

4.    The molding material for fuel parts as claimed in claim 2, wherein the arylene having from 6 to 14 carbon atoms of R is m-xylylene.

**5.** The molding material for fuel parts as claimed in any one of claims 1 to 4, wherein the relative viscosity ηr measured at 25°C by using a 96% concentrated sulfuric acid solution having a polyamide resin concentration of 1.0 g/dl is from 1.8 to 6.0.

**6.** The molding material for fuel parts as claimed in any one of claims 1 to 4, wherein the molding material for fuel parts is a molding material for fuel parts of automobiles.

**7.** The molding material for fuel parts as claimed in any one of claims 1 to 4, wherein the fuel part is a fuel tank, a fuel tube or a part attached thereto.

**8.** A fuel part obtained using the molding material for fuel parts claimed in any one of claims 1 to 4.

**9.** A fuel part comprising a polyamide containing an oxamide bond unit.

**10.** The fuel part as claimed in claim 9, wherein the oxamide bond unit is represented by -NH-R-NHC(=O)C(=O)-[wherein R is an alkylene having from 6 to 12 carbon atoms and/or R is an arylene having from 6 to 14 carbon atoms].

**11.** The fuel part as claimed in claim 10, wherein in the polyamide, the alkylene having from 6 to 12 carbon atoms of R is one or more members selected from hexamethylene, nonamethylene and 2-methyloctamethylene.

**12.** The fuel part as claimed in claim 10, wherein the arylene having from 6 to 14 carbon atoms of R is m-xylylene.

**13.** The molding material for fuel parts as claimed in any one of claims 9 to 12, wherein the fuel part is a fuel part of automobiles.

**14.** The molding material for fuel parts as claimed in any one of claims 9 to 12, wherein the fuel part is a fuel tank, a fuel tube or a part attached thereto.

<table>
<tr><td colspan="2" align="center"><b>INTERNATIONAL SEARCH REPORT</b></td><td>International application No.<br>PCT/JP2008/056518</td></tr>
</table>

**A. CLASSIFICATION OF SUBJECT MATTER**
*C08G69/26*(2006.01)i, *B60K15/03*(2006.01)i, *B65D65/40*(2006.01)i, *C08J5/00*
(2006.01)i

According to International Patent Classification (IPC) or to both national classification and IPC

**B. FIELDS SEARCHED**

Minimum documentation searched (classification system followed by classification symbols)
C08G69/00-69/50, B60K15/03, B65D65/40, C08J5/00

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)
CAplus(STN), REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| X | JP 2006-57033 A (Ube Industries, Ltd.),<br>02 March, 2006 (02.03.06),<br>Claims; Par. Nos. [0001], [0004], [0008],<br>[0010], [0019]<br>(Family: none) | 1,2,5-10,13,<br>14 |

☒ Further documents are listed in the continuation of Box C.          ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>24 June, 2008 (24.06.08) | Date of mailing of the international search report<br>01 July, 2008 (01.07.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/056518

C (Continuation). DOCUMENTS CONSIDERED TO BE RELEVANT

| Category* | Citation of document, with indication, where appropriate, of the relevant passages | Relevant to claim No. |
|---|---|---|
| A | JP 5-506466 A (Exxon Chemical Patents Inc.), 22 September, 1993 (22.09.93), Claims; page 2, upper right column, lines 4 to 13; page 3, upper right column, line 19 to lower left column, line 2; page 4, lower left column, line 12 to lower right column, line 3; page 5, lower right column, lines 3 to 14; page 6, upper left column, line 24 to upper right column, line 11; page 7, lower right column, table I; page 8, upper left column, line 1 to upper right column, line 2 & US 5093466 A    & US 5223603 A & EP 515553 A1    & WO 1991/013113 A1 | 1-14 |
| A | JP 2004-150500 A (Kuraray Co., Ltd., Ube Industries, Ltd.), 27 May, 2004 (27.05.04), Claims; Par. No. [0001]; table 1 & US 2004/0135371 A1 | 1-14 |
| A | JP 2005-179434 A (Ube Industries, Ltd., Kuraray Co., Ltd.), 07 July, 2005 (07.07.05), Claims; table 1 (Family: none) | 1-14 |
| A | Franco, L.; Subirana, J. A.; Puiggali, J., Structure and Morphology of Odd Polyoxamides [Nylon 9,2]. A New Example of Hydrogen-Bonding Interactions in Two Different Directions, Macromolecules, 1998, 31(12), p.3912-3924 | 1-14 |

Form PCT/ISA/210 (continuation of second sheet) (April 2007)

**EP 2 130 851 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007081233 A
- JP 3007761 A
- JP 4239531 A
- JP 5506466 A
- WO 9113113 A